# EUROPEAN PATENT SPECIFICATION

(11) **EP 2 161 303 B1**
(45) Date of publication and mention of the grant of the patent: **27.07.2016**
(21) Application number: 08425594.2
(22) Date of filing: 08.09.2008
(51) Int. Cl.: C08L 27/06, C09K 3/10

(54) **A PLASTISOL COMPOSITION, AND A METHOD AND A PLANT FOR APPLYING THE COMPOSITION TO CONTAINER-CLOSING CAPSULES FOR CREATING A SEAL, AND CAPSULES CONSTRUCTED USING THE COMPOSITION, THE METHOD AND THE PLANT**
EIN PLASTISOLZUSAMMENSETZUNG UND EIN VERFAHREN UND EINE ANLAGE ZUM AUFTRAGEN DER ZUSAMMENSETZUNG AUF BEHÄLTER-VERSCHLIEßENDE KAPSELN ZUR HERSTELLUNG EINER DICHTUNG, SOWIE KAPSELN KONSTRUIERT UNTER VERWENDUNG DER ZUSAMMENSETZUNG, DAS VERFAHREN UND DIE ANLAGE
UNE COMPOSITION DE PLASTISOL, ET UNE MÉTHODE ET UNE USINE POUR APPLIQUER LA COMPOSITION AUX CAPSULES DE FERMETURE DE RÉCIPIENTS POUR CRÉER UN JOINT, ET AUX CAPSULES CONSTRUITES UTILISANT LA COMPOSITION, LA MÉTHODE ET L'USINE

(43) Date of publication of application: 10.03.2010
(73) Proprietor: Tecnocap S.p.A., 84013 Cava de' Tirreni (SA) (IT)
(72) Inventor: Marmiroli, Giuseppe, 42040 Campegine (Reggio Emilia) (IT); Avenzini, Gianpietro, 42040 Campegine (Reggio Emilia) (IT)
(74) Representative: Corradini, Corrado

(56) References cited:
- EP-A- 0 031 673
- EP-A- 0 242 419
- EP-A- 1 205 258
- GB-A- 2 215 643
- US-A- 2 902 463
- US-A- 3 501 554
- US-A- 4 863 030
- US-A- 4 949 859
- US-A1- 2004 198 909
- US-A1- 2008 058 466
- ASHOK SHAH, B. MIKOFALVY, L. HORVATH, RICHARD F. GROSSMAN,: "Handbook of Vinyl Formulating" [Online] 9 August 2007 (2007-08-09), WILEY , XP002513099 Retrieved from the Internet: URL:http://www3.interscience.wiley.com/cgi -bin/bookhome/114802666> Chapter 12, Lubricants and related additives, Sections 12.2.4 and 12.5; Chapter 13, Plastisol technology, pages 371-377; Chapter 21, Fromulating rigid PVC for extrusion, pages 503-514
- DATABASE WPI Week 199805 Thomson Scientific, London, GB; AN 1998-046631 XP002513100 -& JP 09 295631 A (NIPPON CROWN CORK KK) 18 November 1997 (1997-11-18) & JP 09 295631 A (CROWN CORK JAPAN) 18 November 1997 (1997-11-18)
- REINHARD GÄCHTER, HELMUT MÜLLER: "Taschenbuch der Kunststoff- Additive" 1989, HANSER FACHBUCHVERLAG , XP002513098 * page 412 - page 415; table 14 *

## Description

The prior art includes metal capsules having tabs which are used to close containers for foods, generally in glass jars.

The capsules in question are applied to containers by screwing the tabs onto tracts of helical thread present externally of the neck of the containers.

The prepacked containers are subject to heat-stabilising treatments of the food contained in them, treatments known as pasteurisation (up to a maximum of 95-98°C at atmospheric pressure) and sterilisation (up to a maximum of 125-130°C in overpressure conditions).

At the end of these processes the food contained in the prepacked container (a glass jar with the food + closure capsule) is stable at atmospheric temperature, and can be conserved on the shelves of food sales points (e.g. jars of tunafish in olive oil - small jars containing ready-made sauces, and so on).

The capsule is provided in its internal part with a "seal" which adheres to the glazed metal support of the capsule, and comes into contact with the edge of the mouth of the container, which delimits an internal portion thereof such as to obtain a hermetic closure against the external environment in order to prevent contamination of the food by factors which might lead to a rapid alteration of the food.

The hermetic closure must maintain the above-described characteristics in all stages of storage and up to use on the part of the final consumer.

In more detail the capsule is manufactured as follows.

Starting from a specially-glazed metal sheet, the sheet is cut and pressed in a press which in a single operation (one blow alone) cuts a disc and shapes it to form an upper profile of the capsule.

During this stage an annular recess is made, destined to receive the seal which will realise the sealing zone between the capsule and the container mouth.

Thereafter the free edge of the capsule is first edged and then "squeezed" to form the "tabs" destined to engage in the thread present on the neck of the container.

The seal is constituted by a viscous liquid (plastisol) which is in general applied by a pressurised pistol provided with a nozzle located above the annular recess of the capsule, which nozzle rotates on a chuck.

By the word "plastisol" is meant a suspension in a plasticising liquid of a synthetic resin in particles, convertible by means of a heat process (gelatinisation) into a plastic solid.

The solid resin is generally constituted by PVC (polyvinyl chloride) which is plasticised. By plasticisation is meant a process by which a chemical component (the plasticiser) is stably inserted in the molecular structure of a polymer (the PVC in this case), weaking the cohesion forces existing between the molecular chains, and increasing their mobility, mutating the physical characteristics of the starting resin. In the case of PVC, the resin becomes a plasticised "rubbery" resin (the seal).

This insertion process (gelatinisation) occurs, reaching a certain temperature, and it is a decidedly a physical, not a chemical, phenomenon.

The components of the plastisol are supplied to a disperser which at the desired and suitable temperature and pressure mixes and homogenises the components, obtaining a viscous liquid, in the form of a paste representing the plastisol which will be applied in the capsule.

The plastisol seal, once applied in its seating is therefore a viscous liquid. For it to acquire a solid rubbery consistency, it has to undergo a process of hot-gelatinisation, which is done in a belt furnace, where the capsules remain for about 90 seconds at temperatures of between 210°C and 220°C.

During subsequent stages the capsules are cooled and transit below tv camera viewing systems for the necessary controls.

The continuous automatic controls are generally integrated by statistical controls performed by specialised personnel.

Since the introduction of this type of capsule the seal has been constituted by a plastisol in which a series of phthalates have been used as plasticisers. However, the use of phthalates has revealed their toxicity, which is incompatible with progressively stricter standards, and this led to their elimination in the formulation of plastisols destined for seals for capsules for jars for foodstuffs.

At present a plasticiser chosen from among the following is generally used: epoxy soybean oil (ESBO), dibutyl sebacate (DBS), acetyl tributyl citrate (ATBC), acetylated monoglycerides and diglycerides of fatty acids, 12-(acetoxy) stearic acid, 2, 3-bis(acetoxy) propyl ester.

In the prior art, the typical composition of a plastisol used in the manufacturing of the seals for capsules is as set out in following table 1.

**TABLE 1**

| | | | |
|---|---|---|---|
| 1 | Resin | PVC | 50-55% |
| 2 | Plasticiser | ESBO | 35-45% |
| 3 | Stabiliser | Ca and Zn soaps with antioxidants | 0.3-0.6% |
| 4 | Fillers | Titanium dioxide | 1-1.5% |
| 5 | slips | Erucic and oleic amides | 1-2% |
| 6 | Lubricants | Silicone oil | 1-2% |

Other plasticisers are known, e.g. they are disclosed in the document US 2004/0198909. The document discloses a mixture encompassing a plastic, in particular polyvinyl chloride (PVC), polyvinyl butyral (PVB), or a polysulfide, and substances whose physical and chemical properties make them suitable for use as plasticizers. which have good compatibility and which give good low-temperature flexibility in plastic items produced using these plasticizers. More in detail the document discloses mixtures encompassing at least one plastic A and at least one polyester B, the polyester B being preparable from a dicarboxylic acid I, and from at least one diol II selected from the group consisting of 1,2-propanediol, 1,3- butanediol, and 1,4-butanediol, and from a monocarboxylic acid III.

The composition of the plastisol is determined according to the use destination of the capsule, depending on whether they are destined to a heat process of pasteurisation or sterilisation.

Sterilisation demands a greater resistance on the part of the seal in terms of heat and mechanical resistance to compression on the mouth of the jar with respect to the process of pasteurisation, performances also obtained with an appropriate qualitative and quantitative choice of the PVC resin.

The materials and compositions used in the prior art have shown themselves to have further limitations and drawbacks which are incompatible with the existing health standards.

These regulations, issued by the national and international authorities for materials destined for contact with foods, involve passing total and specific migration tests.

The term "total migration" relates to the total sum of the packaging material in direct contact with the food that can be passed on to the food, whereas "specific migration" relates to the quantity a specific chemical component can emit from the packaging material in contact with the food.

Total migration has a limit of 60 ppm (mg/kg of food), verifiable in the prepackaged food at any moment of its lifetime and in simulating liquids. Specific migration has a limit (ppm) which is variable according to the different chemical species considered, and has to be verified in the same conditions as for the total migration.

By way of example, for the seal of capsules it can be stated that the capsule, taken in its entirety, must have a total migration of not more than 60 ppm, and must respect the specific migrations indicated by legal standards.

For example, for PVC resin, in particular the starting monomer CVM (vinyl chloride monomer), the specific migration allowed has a limit of 0.01 ppm.

It has been found that due to the high level of lipophilicity of some plasticisers, in particular ESBO, i.e. due to their affinity with fatty substances and in relation to the surface/quantity of seal exposed to the food, it is not possible to respect total migration limits as regards containers for fatty foods, such as for example vegetables preserved in oil, sauces with oil content and the like, with which foods migration levels of several hundreds of ppm of plasticiser have been found, levels very much above the 60 ppm limit allowed.

In the case of ESBO, no specific migration limit is indicated, so that this material has to stay below the limit of total migration of 60 ppm, in a case in which the capsule (and thus the seal) comes into contact with fatty or oily foods.

In the case of ESBO no specific migration limit is indicated, so the material has to be subjected to total migration limits of 60 ppm, in a case in which the capsule (and therefore the seal) comes into contact with fatty foods or oil. The aim of the invention is to remedy the above-mentioned drawback, i.e. making available alternative plastisol formulations having lower migration values, such as to enter within the limits required by the rules.

The cause of excessive migration into fatty foods of the plasticisers disclosed in the document US 2004/0198909 or selected from among ESBO, DBS, ATBC, acetylated monoglycerides and diglycerides of fatty acids, 12-(acetoxy) stearic acid, 2, 3-bis(acetoxy) propyl ester etc. is to be found, according to the invention, in the well-noted lipophilicity thereof, combined with their (relatively) low molecular weight (low viscosity).

The use of plasticisers having greater molecular weight is felt by technical experts to be a possible solution, but because of the difficulty of working and distributing the plastisol thus obtained, up to today the search for liquid plasticisers which are suitable for the use of the present invention has been prevented.

The invention provides a liquid plasticiser having a lower lipophilicity and a greater molecular weight, and that is, a higher viscosity than ESBO, which thanks to the process of working proposed by the invention is easily workable and usable for the aims of the patent.

In particular the invention uses the following polyadipates: polyesters of 1,2-propandiole and/or 1,3- and/or 1,4 - butandiole and/or polypropylene glycol with adipic acid which can be end-capped with acetic acid or fatty acids C _{12÷18} or n-octanol and/or n-decanol, permitted by the existing norms for materials in contact with foodstuffs.

These polyadipates are therefore not a molecularly definite compound, but represent a family of polymer components having variable composition according to the alternative compositions.

By polyadipates are meant polymer (or macromolecular) compounds obtained by a process of chemical reaction (polycondensation) between a "glycol or/and diole) monomer (bivalent alcohol) which exhibits two oxyhydrilic functions (-OH) in the molecule with a further dicarboxylic organic acid monomer which exhibits two carboxylic functions (-COOH) in the molecule.

The molecular chain can be end-capped as above-described.

A compound derives from the reaction of these components, which belongs to the largest of the polyester families.

**TABLE 2**

| | | |
|---|---|---|
| Glycol or diole (bivalent alcohol) | 1,2-propandiole | 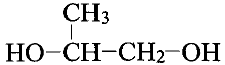 |
| | 1,3-butandiole | 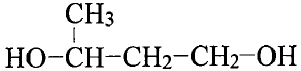 |
| | 1,4-butandiole | HO-CH₂-CH₂-CH₂-CH₂-OH |
| | Polipropylenglycol | 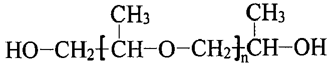 |
| Carboxylic acid | Adipic Acid | 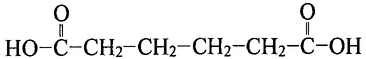 |

Using the monomers reported in table 2, a polyester is obtained, in the example a polyadipate, known as "not end-capped". In this case the structural verification of the industrially-available products shows that the termination is largely constituted by an oxydrile (-OH) deriving from the bivalent alcohol.

In the invention, consideration has been made of the influence of the composition and structure of the polyadipates in relation to their lipophile characteristics, i.e. their greater or lesser tendency to migrate in oil.

The lower lipophilicity is demonstrated by non end-capped polyadipates, i.e. the presence of an oxydrilic group at the end of the chain.

If polyadipates of a suitable viscosity/molecular weight are included in the formulation of the plastisol polyadipates and if the plastisol is applied/arranged in such a way as to minimise the exposed surface to the food without damaging the hermetic closure, an adequate control of the migration can be obtained, with particular attention to the specific migration limit for polyadipates of 30 ppm allowed by the existing laws.

This limit, which represents the specific admitted migration value for the food, relates to the fraction of the polyadipate which exhibits a molecular weight of less than 1000 Da.

According to the invention, in the ambit of the family of polyadipates grouped in the preceding description, a sub-family has been identified which exhibits the following characteristics:
- polyesters of 1,2-propandiole and/or 1,3- and/or 1,4 - butandiole and/or polypropylene glycol with adipic acid having at least a part of the molecular chains which is not end-capped; the molecular structure can be determined using the method described in Maurus Biedermann, Konrad Grob - "GC-MS Characterization of oligomers in polyadipates used as plasticizers for PVC in food contact"- Packaging Technology and Science Vol. 19 Issue 3 pages 159-178;
- the "non-termination" , i.e. the presence of oxydrilic groups (-OH) must be over at least 50% of the ends of the polymer chains below 1000 Da (excluding the cyclic components). This percentage is determined using the method described in the preceding point;
- a fraction of oligomers of the polyadipate (molecular weight below 1000 Da) below 20% determined using SEC (Size-Exclusion Chromatography) and ELSD detector (Evaporative Light Scattering Detector) linearised in segments and with calibration of the polyadipates as described in Maurus Biedermann, Konrad Grob - "Polyadipates used as plasticizers in food contact: fraction below 1000 Da determined by size exclusion chromatography with evaporative light scattering detection and segmental response linearization or UV detection' - Journal of Separation Science Vol. 29 Issue 1 pages 114-122.

If the determination of the above-defined characteristics is done with plastisol the value obtained must be purified of the contribution (i.e. it is subtracted) of the amides and other additives, the content of which in the plastisol must be calculated.

This sub-family can be used in the formulations in order to obtain a plastisol with respects the migration limit of 30 ppm.

According to the invention, the general formulation of the plastisol is that of table 3.

**TABLE 3**

| | | | |
|---|---|---|---|
| 1 | Resin | PVC | 50-56% |
| 2 | Plasticiser | Polyadipates | >35% |
| 3 | Stabiliser | Ca and Zn soaps with antioxidants | 0.3-1,0% |
| 4 | Fillers | Titanium dioxide | 0,5-1% |
| 5 | Slips | Erucic and oleic amides | 1-3% |
| 6 | Lubricants | Silicone oil | 1-2% |

The application of the above-defined plastisol is not possible with the modalities usually followed for known ESBO-based plastisol, and this has created the prejudice against the use of high-viscosity plastisol.

This is due to the fact that high-viscosity plastisols are, as mentioned, impossible to use with known means, i.e. at the temperatures and pressures and with the plants usually used in the sector.

According to the invention it has been surprisingly discovered that with the above-defined polyadipates a plastisol can be realised which has a high gelatinising point, i.e. a temperature at which the increase of viscosity begins after a constant drop, greater with respect to traditional ESBO-based plastisols.

Thanks to this it has been possible to identify a safety temperature at which it is possible to have a maximum drop in plastisol viscosity for a sufficiently long time before gelatination. The correct circuit physical-mechanical conditions have been created on this basis : pressure, nozzle diameter, relative positioning with respect to the capsule and temperature.

In particular, according to the invention the plastisol is maintained at an adequate temperature and is continually mixed in a suitable tank, from which a pump sends it through heated conduits to an application cabin, also maintained at a suitable temperature.

Dispensing is done by means of a gun, and the excess material is returned to the tank, once more via heated tubes.

For the preparation of the plastisol the dimensions of the cylindrical tank provided with a rotating scrape and the shape of the blade must be such as to favour a centrifugal and axial mixing, creating an aspirating "doughnut" effect at the centre so that the powders are correctly moistened and in order to facilitate the extraction of the air. In any case the peripheral velocity or velocities of the blade must be selected such that at the end of the process the temperature of the plastisol does not rise beyond 55°C. The motor must be such as to be able to work on a final mass of plastisol of 400-900 kg at medium-to-high viscosity.

The system works under vacuum at levels not exceeding 0.10 bar of absolute pressure.

The disperser is loaded in the following order:
- the liquid products (polyadipates and silicone oil), checking that the blade is immersed by at least 5-10 cm and mixing is performed for about 15 minutes;
- the solid additives (stabiliser - titanium dioxide - amides) with the blade rotating (obviously not under depression);
- bag by bag of PVC resin, with the blade in action up until the powder disappears;
- the final dispersion is completed under vacuum for at least 15-20 minutes, verifying that the temperature of the plastisol does not exceed 45-55°C;
- the plastisol is unloaded into special containers, filtered over a 1 mm. metal net filter.

The plastisol containers, and therefore the plastisols, must be stored in a heated environment, at 30°-40°C.

Table 4 below gives the composition of a Plastisol suitable for forming a seal of a container destined for pasteurisation.

**TABLE 4**

| | | MATERIAL | % weight |
|---|---|---|---|
| 1 | Resin | PVC K <=70 | 45-56 |
| 2 | Plasticiser | Polyadipates | 38-46 |
| 3 | Stabiliser | Ca and Zn soaps with antioxidants | 0.3-1.0 |
| 4 | Fillers | Titanium dioxide | 0.5-1.2 |
| 5 | Slips | Erucic amide | 0.5-1.5 |
| 6 | Slips | Oleic amide | 0.5-1.5 |
| 7 | Lubricants | Silicone oil | 1.0-2.0 |
| | TOTAL | | 100 |

The following table gives the composition of a Plastisol suitable for forming a seal of containers destined for sterilisation.

| | | MATERIAL | % weight |
|---|---|---|---|
| 1 | Resin | PVC K <= 80 | 43-50 |
| 2 | Plasticiser | Polyadipates | 38-46 |
| 3 | Stabiliser | Ca and Zn soaps with antioxidants | 0.3-1.0 |
| 4 | Inorganic load | Titanium dioxide | 0.5-1.2 |
| 5 | Slips | Erucic amide | 0.5-1.5 |
| 6 | Slips | Oleic amide | 0.5-1.5 |
| 7 | Lubricants | Silicone oil | 1.0-2.0 |
| | TOTAL | | 100 |

In both tables, the item Ca and Zn soaps with antioxidants relates to a preformulated product, well known to experts in the field and available on the market, for example manufactured by Reagens s.p.a. with code AP/59.

The following, table, with the aim of better evidencing the results obtained thanks to the invention, reports the values of the migration in 1 kg of olive oil and per surface unit on immersion of a gelatinised 20-millimetre-diameter and 1 mm-thick PVC disc, in the case of Plastisol according to the prior art (ESBO) and according to the invention:

| | ESBO | INVENTION |
|---|---|---|
| 1 hour at 121 °C | (70-80) ppm | (13-16) ppm |
| 5 days at 40°C | (80-90) ppm | (12-15) ppm |

As for the finished capsule, the seal for containers destined for pasteurisation has been subjected to migration tests performed according to the norms of the existing law for materials in contact with foodstuffs:
- maintenance for one hour at 100°C and for 10 days at 40°C in olive oil or a 3% acetic acid solution;
- examination of samples of jars (containing various foods) subjected to usual shelf life over a six-month period.

The samples conform to the prescriptions set down in Maurus Biedermann, Katell Fiselier, Giuseppe Marmiroli, Giampietro Avanzini, Ernst Rutschmann, Susanne Pfenninger and Koni Grob - MIGRATION FROM THE GASKETS OR LIDS INTO OIL FOODS - European Food Research and Technology - (2008) 226:1399-1407.

The seal for containers destined for sterilisation has been subjected to migration tests performed according to the norms of the existing law for materials in contact with foodstuffs:
- maintenance for one hour at 121°C and for 10 days at 40°C in olive oil or a 3% acetic acid solution;
- maintenance for one hour at 130°C and for 10 days at 40°C in olive oil or a 3% acetic acid solution;
- examination of samples of jars (containing various foods) subjected to the usual shelf life over a six-month period.

The samples conformed to the legal prescriptions for the ambit of products of greatest presence on the market.

## Claims

1. A composition of Plastisol material, destined for creating seals for closing capsules of food products, consisting of the following components:
PVC resin to at least 35%; plasticiser to at least 30%; stabiliser to at least 0.3%; filler to at least 1%; slip to at least 1% and lubricant to at least 1%, **characterised in that** the plasticiser is a polyester, of 1,2-propandiole and/or 1,3- and/or 1,4 - butandiole and/or polypropylene glycol with adipic acid, in which ends of the polymer chains below 1000 Da are constituted, to at least 50% thereof, by hydroxydrilic groups (-OH), excluding cyclic components, with a fraction of less than 20% of oligomers of the polyadipate having a molecular weight of below 1000 Da (all the percentages are expressed in weight comparison to a total of the composition) wherein the filler is titanium dioxide, the slips are erucic amide and oleic amide, the lubricant is silicone oil.

2. The composition of claim 1, **characterised in that** in the plasticiser the ends of the polymer chains below 1000 Da are constituted, to at least 65%, by hydroxydrilic groups (-OH).

3. The composition of claim 1, **characterised in that** the stabiliser comprises Ca and Zn soaps with antioxidants.

4. The composition of claim 1, **characterised in that** it comprises:
45% to 56% of PVC with PVC K <=70
38% to 46% of plasticiser
0.3 to 1% of stabiliser
0.3 to 1% of titanium dioxide
0.5 to 1 % of erucic amide slips
0.5 to 1.5% of oleic amide slips
1 to 2% of silicone oil.

5. The composition of claim 1, **characterised in that** it comprises:
43% to 52% of PVC with PVC K <=80
38% to 46% of plasticiser
0.3 to 1% of stabiliser
0.3 to 1% of titanium dioxide
0.5 to 1.5% of erucic amide slips
0.5 to 1.5% of oleic amide slips
1 to 2% of silicone oil lubricant.

6. A method for manufacturing the material of claim 1, comprising following operations:
- loading the liquid products (polyadipates and silicone oil) in a blade disperser , checking that the blade is immersed by at least 5-10 cm and mixing in a hermetic environment for about 15 minutes;
- loading the solid additives (stabiliser - titanium dioxide - amides) with the blade rotating for about five minutes;
- loading the PVC resin, with the blade in action up until the powder disappears;
- placing the disperser under vacuum conditions for at least 15-20 minutes while completing dispersion at a temperature of less than 55°C;
- filtering the material obtained through a more or less 1 mm. metal net filter;
- conserving the product obtained at a temperature of from 30°-40°C.

7. The method of claim 6, **characterised in that** the blade disperser comprises a cylindrical tank provided with a rotating scraper and blades such as to facilitate a centrifugal and axial mixing, creating a "doughnut" aspiration effect at a centre of the tank.

8. A method for applying the material of claim 6 to a closing capsule of a container, comprising dispensing of the material supplied by a pump through a nozzle, **characterised in that**:
- the material is placed in a conditioning unit maintained at a temperature of 50-60°C;
- the material is pumped at a pressure of up to 30-40 bar;
- the conduits from the pump to the nozzle and from the nozzle to the pump for excess material are maintained at a temperature of from 50°C to 60°C.

9. The closing capsule for container of foodstuffs, **characterised in that** it comprises a seal constructed using the material of claim 1.

## Patentansprüche

1. Zusammensetzung von Plastisolmaterial, das dafür vorgesehen ist, Dichtungen für Verschlusskapseln für Nahrungsmittelprodukte zu erzeugen, aus folgenden Komponenten bestehend:
PVC-Harz zu mindestens 35 %, Weichmacher zu mindestens 30 %, Stabilisator zu mindestens 0,3 %, Füllstoff zu mindestens 1 %, Gleitmittel zu mindestens 1 % und Schmiermittel zu mindestens 1 %, **dadurch gekennzeichnet, dass** der Weichmacher ein Polyester von 1,2-Propandiol und/oder 1,3- und/oder 1,4-Butandiol und/oder Polypropylenglycol mit Adipinsäure ist, wobei Enden der Polymerketten unter 1000 Da zu mindestens 50 % durch Hydroxygruppen (-OH) gebildet sind, zyklische Komponenten ausgenommen, wobei eine Fraktion von weniger als 20 % von Oligomeren des Polyadipats eine Molmasse unter 1000 Da aufweisen (alle Prozentsätze beziehen sich auf das Gesamtgewicht der Zusammensetzung), wobei der Füllstoff Titandioxid ist, die Gleitmittel Erucaamid und Ölsäureamid sind, wobei das Schmiermittel Silikonöl ist.

2. Zusammensetzung nach Anspruch 1, **dadurch gekennzeichnet, dass** im Weichmacher die Enden der Polymerketten unter 1000 Da zu mindestens 65 % durch Hydroxygruppen (-OH) gebildet sind.

3. Zusammensetzung nach Anspruch 1, **dadurch gekennzeichnet, dass** der Stabilisator Ca- und Zn-Seifen mit Antioxidantien umfasst.

4. Zusammensetzung nach Anspruch 1, **dadurch gekennzeichnet, dass** sie Folgendes umfasst:
45 bis 56 % PVC mit PVC K <=70,
38 bis 46 % Weichmacher,
0,3 bis 1 % Stabilisator,
0,3 bis 1 % Titandioxid,
0,5 bis 1 % Erucaamid-Gleitmittel,
0,5 bis 1,5 % Ölsäureamid-Gleitmittel,
1 bis 2 % Silikonöl.

5. Zusammensetzung nach Anspruch 1, **dadurch gekennzeichnet, dass** sie Folgendes umfasst:
43 bis 52 % PVC mit PVC K <=80,
38 bis 46 % Weichmacher,
0,3 bis 1 % Stabilisator,
0,3 bis 1 % Titandioxid,
0,5 bis ,51 % Erucaamid-Gleitmittel,
0,5 bis 1,5 % Ölsäureamid-Gleitmittel,
1 bis 2 % Silikonöl-Schmiermittel.

6. Verfahren zur Herstellung des Materials nach Anspruch 1, Folgende Vorgänge umfassend:
Laden der flüssigen Produkte (Polyadipate und Silikonöl) in einen Blattdispergierer, Überprüfen, dass das Blatt zu mindestens 5 bis 10 cm eingetaucht ist und etwa 15-minütiges Mischen in einer hermetischen Umgebung,
Laden der Feststoff-Additive (Stabilisator - Titanoxid - Amide), wobei sich das Blatt etwa 5 Minuten dreht,
Laden des PVC-Harzes, wobei das Blatt betrieben wird, bis das Pulver verschwindet,
Platzieren des Dispergierers unter Unterdruckbedingungen für mindestens 15 bis 20 Minuten, während das Dispergieren bei einer Temperatur von weniger als 55 °C abgeschlossen wird,
Filtern des gewonnenen Materials durch einen Metallsiebfilter mit einer Maschengröße von mehr oder weniger 1 mm,
Konservieren des erzielten Produktes bei einer Temperatur von 30 bis 40 °C.

7. Verfahren nach Anspruch 6, **dadurch gekennzeichnet, dass** der Blattdispergierer einen zylinderförmigen Tank mit rotierendem Abstreifer und rotierenden Blättern umfasst, so dass ein zentrifugales und axiales Mischen unterstützt wird, was in der Mitte des Tanks eine "Kreisring"-Saugwirkung erzeugt.

8. Verfahren zum Aufbringen des Materials auf eine Verschlusskapsel eines Behälters, das Ausgeben des Materials umfassend, das mittels einer Pumpe durch eine Düse zugeführt wird, **dadurch gekennzeichnet, dass**:
das Material in einer Konditionierungseinheit platziert wird, die bei einer Temperatur von 50 bis 60 °C gehalten wird,
das Material mit einem Druck von bis zu 30 bis 40 bar gepumpt wird,
die Leitungen von der Pumpe zur Düse und von der Düse zur Pumpe für überschüssiges Material bei einer Temperatur von 50 bis 60 °C gehalten werden.

9. Verschlusskapsel für Behälter von Nahrungsmitteln, **dadurch gekennzeichnet, dass** sie eine Dichtung umfasst, die unter Verwendung des Materials nach Anspruch 1 erzeugt ist.

## Revendications

1. Composition de matériau Plastisol, destiné à créer des joints d'étanchéité pour des capsules de fermeture de produits alimentaires, comprenant les composants suivants :
une résine PVC pour au moins 35% ; un plastifiant pour au moins 30% ; un stabilisateur pour au moins 0,3% ; une matière de remplissage pour au moins 1% ; un agent de glissement pour au moins 1% et un lubrifiant pour au moins 1%, **caractérisée en ce que** le plastifiant est un polyester, de 1,2-propanediol et/ou 1,3- et/ou 1,4-butanediol et/ou polypropylène glycol avec de l'acide adipique, dans lequel des extrémités des chaines de polymère au-dessous de 1000 Da sont constituées, pour au moins 50% de celles-ci, par des groupes hydroxydriliques (-OH), en excluant des composants cycliques, avec une fraction de moins de 20% d'oligomères de polyadipate ayant un poids moléculaire de moins de 1000 Da (tous les pourcentages sont exprimés par comparaison de poids avec un total de la composition) dans lequel la matière de remplissage est du dioxyde de titane, les agents de glissement sont l'amide d'acide érucique et l'amide d'acide oléique, le lubrifiant est de l'huile de silicone.

2. Composition selon la revendication 1, **caractérisée en ce que**, dans le plastifiant, les extrémités des chaines de polymère au-dessous de 1000 Da sont constituées, pour au moins 65%, par des groupes hydroxydriliques (-OH).

3. Composition selon la revendication 1, **caractérisée en ce que** le stabilisateur comprend des savons au Ca et Zn avec des antioxydants.

4. Composition selon la revendication 1, **caractérisée en ce qu'**elle comprend :
45% à 56% de PVC avec K PVC <= 70
38% à 46% de plastifiant
0,3 à 1% de stabilisateur
0,3 à 1 % de dioxyde de titane
0,5 à 1% d'agents de glissement d'amide d'acide érucique
0,5 à 1,5% d'agents de glissement d'amide d'acide oléique
1 à 2% d'huile de silicone.

5. Composition selon la revendication 1, **caractérisée en ce qu'**elle comprend
43% à 52% de PVC avec K PVC <= 80
38% à 46% de plastifiant
0,3 à 1% de stabilisateur
0,3 à 1 % de dioxyde de titane
0,5 à 1,5% d'agents de glissement d'amide d'acide érucique
0,5 à 1,5% d'agents de glissement d'amide d'acide oléique
1 à 2% de lubrifiant d'huile de silicone.

6. Procédé de fabrication du matériau de la revendication 1, comprenant les opérations suivantes :
- le chargement des produits liquides (polyadipates et huile de silicone) dans un dispositif de dispersion à lame, la vérification que la lame est immergée d'au moins 5-10 cm et le mélange dans un environnement hermétique pendant environ 15 minutes ;
- le chargement des additifs solides (stabilisateur - dioxyde de titane - amides) avec la lame en rotation pendant environ cinq minutes ;
- le chargement de la résine PVC, avec la lame en action jusqu'à ce que la poudre disparaisse ;
- la mise en place du dispositif de dispersion dans des conditions de vide pendant au moins 15-20 minutes tout en achevant la dispersion à une température de moins de 55°C ;
- le filtrage du matériau obtenu à travers un filtre à mailles métalliques de plus ou moins 1 mm ;
- la conservation du produit obtenu à une température de 30°-40°C.

7. Procédé selon la revendication 6, **caractérisé en ce que** le dispositif de dispersion à lame comprend un réservoir cylindrique muni d'un racloir rotatif et de lames susceptibles de faciliter un mélange centrifuge et axial, en créant un effet d'aspiration « bouée » au centre du réservoir.

8. Procédé pour l'application du matériau de la revendication 6 à une capsule de fermeture d'un récipient, comprenant la distribution du matériau délivré par une pompe à travers une buse, **caractérisé en ce que** :
- le matériau est placé dans une unité de conditionnement maintenue à une température de 50-60°C ;
- le matériau est pompé à une pression allant jusqu'à 30-40 bar ;
- les conduits de la pompe à la buse et de la buse à la pompe pour le matériau en excès sont maintenus à une température de 50°C à 60°C.

9. Capsule de fermeture pour récipient de produits alimentaires, **caractérisée en ce qu'**elle comprend un joint d'étanchéité réalisé en utilisant le matériau de la revendication 1.
